# EUROPÄISCHE PATENTANMELDUNG

(11) **EP 3 246 284 A1**
(43) Veröffentlichungstag der Anmeldung: **22.11.2017**
(21) Anmeldenummer: 16170534.8
(22) Anmeldetag: 20.05.2016
(51) Int. Cl.: B66C 13/08, B66C 17/08, F27D 3/00

(54) **BESCHICKUNGSVORRICHTUNG FÜR EINE METALLURGISCHE ANLAGE**

(71) Anmelder: Primetals Technologies Germany GmbH, 91052 Erlangen (DE)
(72) Erfinder: Huber, Hansjörg, 77694 Kehl (DE); Kaeferboeck, Heinrich, 4020 Linz (AT); Moßmann, Björn, 77654 Offenburg (DE); Müller, Alexander, 77652 Offenburg (DE)
(74) Vertreter: Metals@Linz

(57) **Zusammenfassung**

Die Erfindung betrifft eine Beschickungsvorrichtung (8) für eine metallurgische Anlage (2), aufweisend einen Beschickungsbehälter (10) zur Aufnahme von Beschickungsgut, insbesondere zur Aufnahme von Schrott, und eine Transportvorrichtung (22) zum Transportieren des Beschickungsbehälters (10), welche eine Haltevorrichtung (28) zum Halten des Beschickungsbehälters (10) umfasst.

Um eine zügige Beschickung eines metallurgischen Ofens (4) mit Beschickungsgut zu ermöglichen, wird vorgeschlagen, dass die Transportvorrichtung (22) mehrere die Haltevorrichtung (28) tragende Hubseile (34) aufweist, die einen Seilschacht (36) ausbildend geführt sind.

## Beschreibung

Die Erfindung betrifft eine Beschickungsvorrichtung für eine metallurgische Anlage, aufweisend einen Beschickungsbehälter zur Aufnahme von Beschickungsgut, insbesondere zur Aufnahme von Schrott, und eine Transportvorrichtung zum Transportieren des Beschickungsbehälters, welche eine Haltevorrichtung zum Halten des Beschickungsbehälters umfasst.

Es sind verschiedene Verfahrensweisen bekannt, einen metallurgischen Ofen mit Beschickungsgut zu befüllen ("zu beschicken"). Häufig werden Beschickungsbehälter für den Transport des Beschickungsguts eingesetzt.

Im Falle von Schmelzöfen wird überwiegend Schrott (gegebenenfalls mit Zuschlagstoffen) als Beschickungsgut verwendet. Daher werden Beschickungsbehälter bei Schmelzofen-Anlagen auch als Schrottkörbe bezeichnet.

Eine Beschickungsvorrichtung der oben genannten Art ermöglicht es, das Beschickungsgut von einem Beschickungsgut-Reservoir direkt zu einer Beschickungsöffnung eines metallurgischen Ofens zu transportieren oder das Beschickungsgut zunächst zu einem Zwischenbehälter zu transportieren, mittels welchem das Beschickungsgut zu der Beschickungsöffnung weitertransportiert werden kann.

Die Produktivität einer metallurgischen Anlage hängt unter anderem davon ab, wie zügig die Beschickung ihres Ofens durchgeführt werden kann.

Eine Aufgabe der Erfindung ist es, eine zügige Beschickung eines metallurgischen Ofens mit Beschickungsgut zu ermöglichen.

Diese Aufgabe wird erfindungsgemäß gelöst durch eine Beschickungsvorrichtung mit den Merkmalen des Anspruchs 1.

Die erfindungsgemäße Beschickungsvorrichtung weist einen Beschickungsbehälter zur Aufnahme von Beschickungsgut, insbesondere zur Aufnahme von Schrott, auf. Zudem weist die erfindungsgemäße Beschickungsvorrichtung eine Transportvorrichtung zum Transportieren des Beschickungsbehälters auf, welche eine Haltevorrichtung zum Halten des Beschickungsbehälters umfasst. Ferner ist bei der erfindungsgemäßen Beschickungsvorrichtung vorgesehen, dass die Transportvorrichtung mehrere die Haltevorrichtung tragende Hubseile aufweist, die einen Seilschacht ausbildend geführt sind.

Vorteilhafte Weiterbildungen der erfindungsgemäßen Beschickungsvorrichtung sind jeweils Gegenstand der abhängigen Patentansprüche sowie der nachfolgenden Beschreibung.

Die Erfindung geht von der Überlegung aus, dass es beim Transport des Beschickungsbehälters mittels der Transportvorrichtung, insbesondere beim Anfahren und/oder Abstoppen, zu einer Pendelbewegung des Beschickungsbehälters kommen kann. Wird vor dem Entleeren des Beschickungsbehälters nicht hinreichend lange gewartet, bis die Pendelbewegung abgeklungen ist, kann es beim Entleeren des Beschickungsbehälters zu einer Beschädigung der metallurgischen Anlage kommen.

Dadurch, dass bei der Erfindung vorgesehen ist, dass die Hubseile einen Seilschacht ausbildend geführt sind, können Pendelbewegungen des Beschickungsbehälters reduziert werden. Im Sinne der Erfindung liegt dann eine einen Seilschacht ausbildende Führung der Hubseile vor, wenn die Hubseile derart geführt sind, dass die Hubseile jeweils mehrere Seilstränge, insbesondere tragende Seilstränge, ausbilden, wobei die Seilstränge jeweils schräg verspannt/geführt sind. Der Begriff "schräg" kann hierbei als von einer horizontalen oder vertikalen Linie abweichend aufgefasst werden.

Durch eine solche Führung der Hubseile kann eine hohe Steifigkeit der Transportvorrichtung erreicht werden. Ferner kann durch eine solche Führung der Hubseile eine hohe Stabilität der Haltevorrichtung - und damit auch des Beschickungsbehälters - gegenüber Pendelbewegungen erreicht werden.

Dadurch, dass die Hubseile einen Seilschacht ausbildend geführt sind, wird ein zügigerer Transport, insbesondere ein schnelleres Anfahren und/oder Abstoppen, des Beschickungsbehälters ermöglicht. Zudem kann die Zeit, die gewartet werden muss, bis der Beschickungsbehälter an seinem Zielort entleert werden kann, reduziert werden. Folglich kann eine Stillstandzeit der metallurgischen Anlage reduziert werden, was wiederum zu einer Produktionssteigerung der Anlage führen kann.

Die Hubseile weisen vorzugsweise jeweils mindestens zwei Seilstränge auf, die schräg zueinander, insbesondere V-förmig zueinander, geführt sind. Ferner können die Seilstränge jeweils über Kreuz zu einem der anderen Seilstränge geführt sein.

Besonders bevorzugt ist es, wenn die Transportvorrichtung acht oder mehr Hubseile aufweist, die einen Seilschacht ausbildend geführt sind. Dadurch kann eine besonders hohe Steifigkeit der Transportvorrichtung erreicht werden.

Grundsätzlich kann der Beschickungsbehälter zumindest abschnittweise rund, insbesondere zylindrisch, ausgebildet sein. Bevorzugt ist es, wenn der Beschickungsbehälter zumindest abschnittweise, insbesondere an seiner oberen Hälfe, eckig ausgebildet ist. Beispielsweise kann der Beschickungsbehälter eine polygonale, insbesondere rechteckige Form aufweisen.

Die Transportvorrichtung ist zweckmäßigerweise dazu eingerichtet, den Beschickungsbehälter horizontal zu versetzten, d. h. den Beschickungsbehälter entlang einer horizontalen Richtung zu bewegen. Weiter ist es zweckmäßig, wenn die Transportvorrichtung dazu eingerichtet ist, den Beschickungsbehälter anzuheben und abzusenken, d. h. den Beschickungsbehälter in eine vertikale Richtung zu versetzen.

In einer bevorzugten Ausgestaltung der Erfindung ist die Transportvorrichtung als Kran ausgebildet. Besonders bevorzugt ist es, wenn die Transportvorrichtung als Portalkran oder als Brückenkran ausgebildet ist. Solche Kräne können, bedingt durch ihre Bauart, sehr große Lasten transportieren und eignen sich daher besonders gut zum Transportieren schwerer (mit Beschickungsgut beladener) Beschickungsbehälter.

Zweckmäßigerweise umfasst die Transportvorrichtung eine Laufschieneneinheit. Außerdem ist es zweckmäßig, wenn die Transportvorrichtung eine Laufkatze, auch Krankatze genannt, umfasst, welche beispielsweise ein Hubwerk tragen kann. In bevorzugter Weise ist die Laufkatze eine an der Laufschieneneinheit geführte Laufkatze. Mit anderen Worten, die Laufkatze wird vorzugsweise von der Laufschieneneinheit geführt.

Vorteilhafterweise ist die Laufkatze mit einer oder mehreren Seiltrommeln, insbesondere mit zwei Seiltrommeln, ausgestattet. Weiter ist es vorteilhaft, wenn die Laufkatze einen oder mehrere Motoren zum Antreiben der Seiltrommel bzw. Seiltrommeln aufweist.

Zweckmäßigerweise sind die Hubseile an der Laufkatze befestigt. Zum Beispiel können die Hubseile jeweils mit einem Ende an einem Tragrahmen der Laufkatze befestigt sein. Mit dem anderen Ende können die Hubseile beispielsweise an der Seiltrommel bzw. - im Falle mehrerer Seiltrommeln - an einer der Seiltrommeln befestigt sein.

Die Haltevorrichtung weist vorzugsweise mehrere, insbesondere mindestens acht, Umlenkrollen zum Umlenken der Hubseile auf. Zweckmäßigerweise führen die Umlenkrollen die Hubseile. Des Weiteren kann die Laufkatze Führungselemente, insbesondere Umlenkrollen, zum Führen bzw. Umlenken der Hubseile aufweisen.

Die Haltevorrichtung kann zum Beispiel eine Krantraverse sein. Zweckmäßigerweise umfasst die Haltevorrichtung mehrere miteinander verbundene Balken, insbesondere mehrere einstückig miteinander ausgebildete Balken. Die Haltevorrichtung kann unter anderem H-förmig oder rechteckförmig ausgebildet sein.

Ferner ist es bevorzugt, wenn die Haltevorrichtung mehrere Haltehaken aufweist. Die Haltevorrichtung kann also insbesondere eine Hakentraverse sein. Weiter ist es vorteilhaft, wenn die Haltehaken jeweils an einem Haltezapfen des Beschickungsbehälters einhakbar sind.

Bei einer besonders vorteilhaften Ausgestaltung der Erfindung weist die Haltevorrichtung mindestens vier Haltehaken auf. Zweckmäßigerweise sind die Haltehaken nicht alle in einer Reihe angeordnet. Vorzugsweise spannen die Haltehaken ein Rechteck auf. Das heißt, die Haltehaken sind vorzugsweise an den Eckpunkten eines (gedachten) Rechtecks angeordnet.

Die Verwendung von vier Haltehaken ermöglicht eine 4-Punkte-Aufhängung des Beschickungsbehälters, also eine Aufhängung des Beschickungsbehälters an vier unterschiedlichen Punkten. Verglichen mit einer 2-Punkte-Aufhängung kann dadurch die Anfälligkeit des Beschickungsbehälters, beim Transport, insbesondere beim Anfahren und/oder Abbremsen, zu pendeln, (weiter) reduziert werden. Ferner kann mit einer 4-Punkte-Aufhängung ein Schiefhängen des Beschickungsbehälters im Falle einer ungleichmäßigen Beladung des Beschickungsbehälters vermieden werden.

Der Beschickungsbehälter weist zweckmäßigerweise eine Austrittsöffnung auf. Über die Austrittsöffnung kann der Beschickungsbehälter entleert werden. Weiter ist es bevorzugt, wenn der Beschickungsbehälter eine Verschlusseinrichtung zum Schließen und Freigeben der Austrittsöffnung aufweist. Zudem ist es vorteilhaft, wenn der Beschickungsbehälter einen Betätigungsmechanismus zum Betätigen der Verschlusseinrichtung aufweist.

Die Verschlusseinrichtung kann mindestens eine Klappe, insbesondere eine Bodenklappe, umfassen. Gemäß einer bevorzugten Ausgestaltung der Erfindung umfasst die Verschlusseinrichtung zwei schwenkbar gelagerte Bodenklappen.

In bevorzugter Weise sind die Bodenklappen nach außen öffnende Klappen. Zum Freigeben der Austrittsöffnung werden die Bodenklappen vorzugsweise auseinandergeführt. Zum Schließen werden die Bodenklappen vorzugsweise zusammengeführt.

Zweckmäßigerweise sind die Bodenklappen identisch oder im Wesentlichen identisch zueinander ausgestaltet. Beispielsweise können die Bodenklappen als greiferförmige Halbschalen ausgestaltet sein. Des Weiteren sind die Bodenklappen vorteilhaferweise symmetrisch bezüglich einer Symmetrieebene des Beschickungsbehälters angeordnet. Weiter ist es vorteilhaft, wenn die Bewegung der Bodenklappen simultan erfolgt.

Durch die Verwendung zweier Bodenklappen, insbesondere zweier simultan öffnender Bodenklappen, kann (gegenüber der Verwendung einer einzigen Bodenklappe) die Wahrscheinlichkeit verringert werden, dass sich das Beschickungsgut beim Öffnen der Verschlusseinrichtung verkantet.

Der Beschickungsbehälter weist zusätzlich zu der Austrittsöffnung zweckmäßigerweise eine Aufnahmeöffnung auf, durch welche das Beschickungsgut in den Beschickungsbehälter eingebracht werden kann. Vorzugsweise sind die Aufnahmeöffnung und die Austrittsöffnung einander gegenüberliegend angeordnet.

Der Betätigungsmechanismus kann unter anderem mindestens einen Seilzug umfassen. Ein Seilzug stellt eine Vorrichtung dar, die rauen Bedingungen, wie sie bei metallurgischen Prozessen üblich sind, insbesondere hohen Temperaturen und/oder starker Verschmutzung, standhalten kann. Zudem kann ein Seilzug konstruktiv einfach und wartungsarm realisiert werden. Folglich kann ein Seilzug einen kostengünstigen und zuverlässigen (Teil eines) Betätigungsmechanismus ausbilden. Der Seilzug weist zweckmäßigerweise mindestens ein Seil auf, das an der Verschlusseinrichtung, insbesondere an einer der Bodenklappen, befestigt ist.

In einer vorteilhaften Weiterbildung der Erfindung umfasst der Betätigungsmechanismus mindestens einen Flaschenzug. Insbesondere kann der zuvor erwähnte Seilzug als Flaschenzug ausgebildet sein. Zweckmäßigerweise umfasst der Flaschenzug mindestens ein Seil, das an der Verschlusseinrichtung, insbesondere an einer der Bodenklappen, befestigt ist.

Bei dem Seil des Seilzugs bzw. Flaschenzugs kann es sich beispielsweise um ein Drahtseil, insbesondere um ein Stahl-Drahtseil, handeln. Bevorzugt ist es, wenn der Seilzug bzw. der Flaschenzug zwei Seile umfasst. An jeder der beiden Bodenklappen der Verschlusseinrichtung kann eins dieser Seile befestigt sein.

Der Flaschenzug kann insbesondere als invertierter Flaschenzug ausgeführt sein (auch umgekehrter Flaschenzug genannt). Auf diese Weise ist es möglich, zum Antreiben des Flaschenzugs eine Antriebseinheit mit einem geringeren Hub zu verwenden, was wiederum eine kompakte Dimensionierung der Antriebseinheit ermöglicht.

Als invertierter Flaschenzug kann ein Flaschenzug aufgefasst werden, welcher dazu eingerichtet ist, einen (Abwärts-)Hub, der zum Anheben einer Last um eine vorgegebene Höhe aufzubringen ist, zu verringern. Ferner ist der invertierte Flaschenzug zweckmäßigerweise dazu eingerichtet, eine Kraft, die zum Anheben der Last um die vorgegebene Höhe aufzubringen ist, zu vergrößern. Zweckmäßigerweise wird die aufzubringende Kraft vom invertierten Flaschenzug um denselben Faktor erhöht, um den der (Abwärts-)Hub verringert wird.

Außerdem kann der Beschickungsbehälter eine Linearführung, insbesondere ein Gleitführung, aufweisen. Der Flaschenzug wiederum kann einen an der Linearführung linear verschiebbar gelagerten Schlitten umfassen. Vorzugsweise ist der Schlitten mit einer Rolleneinheit ausgestattet.

Die Rolleneinheit kann eine oder mehrere, vorzugsweise mindestens zwei, Umlenkrollen zum Umlenken des Seils bzw. der Seile des Flaschenzugs umfassen. Im Falle mehrerer Rollen können die Umlenkrollen insbesondere um dieselbe Rotationsachse rotierbar gelagert sein.

Darüber hinaus ist es zweckmäßig, wenn der Flaschenzug eine oder mehrere ortsfest bezüglich einer Wandung des Beschickungsbehälters angeordnete Umlenkrollen zum Führen seines Seils bzw. seiner Seile umfasst.

Weiterhin kann der Beschickungsbehälter mehrere, insbesondere zwei, solche Linearführungen aufweisen.

Ferner kann vorgesehen sein, dass die Transportvorrichtung mindestens eine Antriebseinheit, insbesondere einen Linearantrieb, zum Antreiben des Betätigungsmechanismus aufweist. Zweckmäßigerweise ist die Antriebseinheit derart angeordnet, dass sie eine Kraft auf den Betätigungsmechanismus, insbesondere auf den zuvor erwähnten Schlitten, ausüben kann.

Vorzugsweise ist die Antriebseinheit an der Haltevorrichtung, insbesondere an einem Balken der Haltevorrichtung, befestigt. Die Antriebseinheit kann als integriertes Element der Transportvorrichtung ausgeführt sein. Dadurch kann auf ein aufwändiges Positionieren einer separaten Vorrichtung zum Antreiben des Betätigungsmechanismus in der Nähe des Beschickungsbehälters, insbesondere bei jeder Entleerung des Beschickungsbehälters, verzichtet werden.

Weiterhin kann die Antriebseinheit beispielsweise als Arbeitszylinder, insbesondere als Hydraulik-, Pneumatik- oder Elektrohubzylinder, ausgebildet sein. Arbeitszylinder (auch Hubzylinder genannt) sind vielfach erprobt, kostengünstig erhältlich und präzise steuerbar. Des Weiteren kann die Antriebseinheit ein Zylindergehäuse und/oder eine Schubstange umfassen.

Zweckmäßigerweise ist die Antriebseinheit dazu eingerichtet, den zuvor erwähnten Schlitten des Flaschenzugs zu verschieben, beispielsweise durch ein Ein-/Ausfahren ihrer Schubstange.

In bevorzugter Weise ist die Antriebseinheit ein drückender Arbeitszylinder, welcher mit seiner Schubstange mittelbar oder unmittelbar gegen den zuvor erwähnten Schlitten drückt, insbesondere wenn die Schubstange (hinreichend weit) ausgefahren wird. Hierbei kann der Schlitten nach unten gedrückt werden. Dadurch wiederum wird vorzugsweise die Verschlusseinrichtung geöffnet, insbesondere indem ihre Bodenklappen auseinander geführt werden.

Übt die Antriebseinheit keine (drückende) Kraft auf den Schlitten aus, werden die Bodenklappen der Verschlusseinrichtung vorzugsweise unter Einfluss der auf sie wirkenden Gewichtskraft zusammengeführt und dadurch die Verschlusseinrichtung bzw. die Austrittsöffnung des Beschickungsbehälters geschlossen.

Besonders bevorzugt ist es, wenn der Betätigungsmechanismus zwei Flaschenzüge, insbesondere zwei symmetrisch bezüglich einer Symmetrieebene des Beschickungsbehälters angeordnete Flaschenzüge, aufweist. Auf diese Weise kann die zum Betätigen der Verschlusseinrichtung erforderliche Kraft auf die zwei Flaschenzüge aufgeteilt werden, sodass es ausreicht, wenn der jeweilige Flaschenzug eine geringere Kraft auf die Verschlusseinrichtung überträgt.

Der Beschickungsbehälter weist vorteilhafterweise mehrere, insbesondere mindestens vier, Haltezapfen auf. Zweckmäßigerweise ist an die Haltezapfen jeweils ein Haltehaken der Haltevorrichtung einhakbar. Die Verwendung von vier Haltehaken ermöglicht eine 4-Punkte-Aufhängung des Beschickungsbehälters, welche wie zuvor erwähnt besonders vorteilhaft ist.

Vorzugsweise sind die Haltezapfen in einem oberen Bereich des Beschickungsbehälters, insbesondere alle auf derselben Höhe, angeordnet. Die Haltezapfen können zum Beispiel im Bereich der Ecken des Beschickungsbehälters angeordnet sein. Insbesondere können mindestens zwei der Haltezapfen an einer ersten Seite des Beschickungsbehälters und mindestens zwei andere der Haltezapfen an einer der ersten Seite gegenüberliegenden zweiten Seite des Beschickungsbehälters angeordnet sein.

Ferner betrifft die Erfindung eine metallurgische Anlage. Die metallurgische Anlage umfasst zweckmäßigerweise einen metallurgischen Ofen, insbesondere einen Schmelzofen, wie zum Beispiel einen Lichtbogenofen. Außerdem umfasst die metallurgische Anlage vorzugsweise die erfindungsgemäße Beschickungsvorrichtung, insbesondere eine der zuvor beschriebenen vorteilhaften Weiterbildungen der erfindungsgemäßen Beschickungsvorrichtung. Weiter ist es zweckmäßig, wenn der metallurgische Ofen eine Beschickungsöffnung aufweist, durch welche Beschickungsgut, insbesondere Schrott, in den metallurgischen Ofen einführbar ist.

Das Beschickungsgut, das in dem Beschickungsbehälter der Beschickungsvorrichtung transportiert wird, kann aus dem Beschickungsbehälter beispielweise direkt in den metallurgischen Ofen eingebracht werden. Alternativ kann die metallurgische Anlage einen weiteren Beschickungsbehälter (nachfolgend Zwischenbehälter genannt) umfassen, der das Beschickungsgut aus dem erstgenannten Beschickungsbehälter aufnimmt und mit dessen Hilfe das Beschickungsgut zum metallurgischen Ofen (weiter) transportiert wird. Ein solcher Zwischenbehälter kann zum Beispiel auf einer Verfahreinheit angeordnet sein, mittels welcher der Zwischenbehälter verfahrbar ist.

Des Weiteren kann die metallurgische Anlage eine separate Antriebsvorrichtung zum Antreiben des Betätigungsmechanismus, insbesondere zum Runterdrücken des zuvor erwähnten Schlittens, aufweisen. Zweckmäßigerweise ist die separate Antriebsvorrichtung nicht dauerhaft an der Transportvorrichtung befestigt. Die separate Antriebsvorrichtung kann unter anderem einen Arm mit einem gabelförmigen Abschnitt aufweisen. Zum Antreiben des Arms kann die separate Antriebsvorrichtung beispielsweise einen Arbeitszylinder aufweisen.

Diese separate Antriebsvorrichtung kann insbesondere anstelle der zuvor erwähnten Antriebseinheit der Transportvorrichtung vorgesehen sein. Alternativ kann die separate Antriebsvorrichtung zusätzlich zu der Antriebseinheit der Transportvorrichtung vorgesehen sein. In letztgenanntem Fall kann die separate Antriebsvorrichtung zum Beispiel dann eingesetzt werden, wenn die Antriebseinheit der Transportvorrichtung defekt ist.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden. Insbesondere sind diese Merkmale jeweils einzeln und in beliebiger geeigneter Kombination mit der erfindungsgemäßen Vorrichtung kombinierbar.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung des Ausführungsbeispiels der Erfindung, das im Zusammenhang mit den Zeichnungen näher erläutert wird. Das Ausführungsbeispiel dient der Erläuterung der Erfindung und beschränkt die Erfindung nicht auf die darin angegebenen Kombinationen von Merkmalen, auch nicht in Bezug auf funktionale Merkmale. Außerdem können dazu geeignete Merkmale des Ausführungsbeispiels auch explizit isoliert betrachtet und mit einem beliebigen der Ansprüche kombiniert werden.

In den Zeichnungen ist ein Ausführungsbeispiel der Erfindung dargestellt, welches im Weiteren näher erläutert wird.

Es zeigen:
- FIG 1: eine schematische Darstellung einer metallurgischen Anlage mit einem metallurgischen Ofen, einem Zwischenbehälter und einer Beschickungsvorrichtung, die eine Transportvorrichtung und einen Beschickungsbehälter umfasst;
- FIG 2: eine perspektivische Darstellung eines Teils der Transportvorrichtung;
- FIG 3: eine perspektivische Darstellung des Zwischenbehälters, des Beschickungsbehälters und eines Teils der Transportvorrichtung;
- FIG 4: eine perspektivische Darstellung des Beschickungsbehälters, bei welcher dessen Verschlusseinrichtung geschlossen ist;
- FIG 5: eine perspektivische Darstellung des Beschickungsbehälters, bei welcher dessen Verschlusseinrichtung geöffnet ist;
- FIG 6: eine Seitenansicht des Beschickungsbehälters, bei welcher dessen Verschlusseinrichtung geschlossen ist und
- FIG 7: eine Seitenansicht des Beschickungsbehälters, bei welcher dessen Verschlusseinrichtung geöffnet ist.

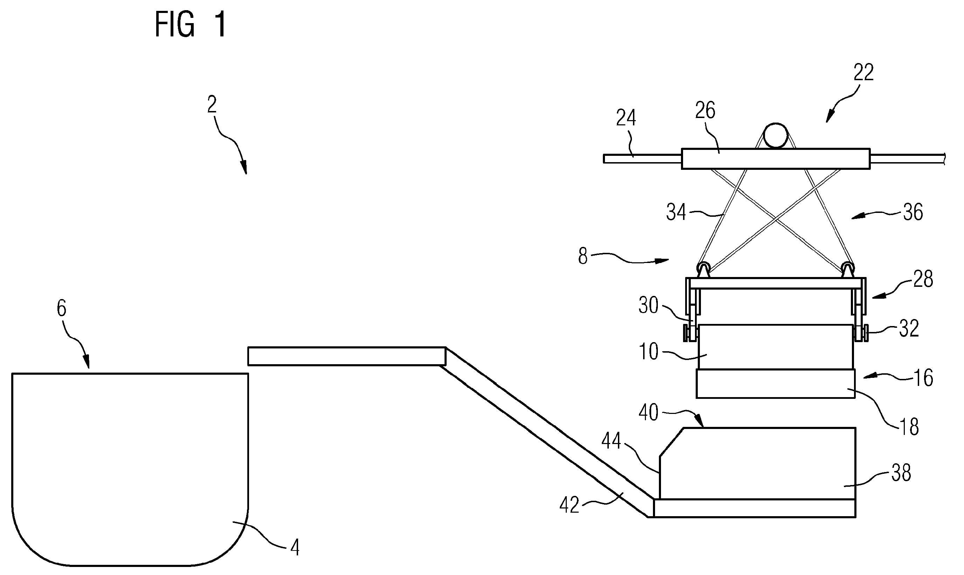

FIG 1 zeigt eine schematische Darstellung einer metallurgischen Anlage 2. Die metallurgische Anlage 2 umfasst einen metallurgischen Ofen 4, bei dem es sich im vorliegenden Ausführungsbeispiel um einen Lichtbogenofen handelt.

Der metallurgische Ofen 4 ist auf einem (figürlich nicht dargestellten) Tragrahmen gelagert und weist eine Beschickungsöffnung 6 auf, durch die Beschickungsgut in den Ofen 4 eingebracht werden kann. Außerdem weist der Ofen 4 einen (figürlich nicht dargestellten) Deckel auf, an welchem mehrere Elektroden befestigt sind und der im Betrieb des Ofens 4 die Beschickungsöffnung 6 abdeckt.

Weiter umfasst die metallurgische Anlage 2 eine Beschickungsvorrichtung 8. Die Beschickungsvorrichtung 8 umfasst einen Beschickungsbehälter 10 zur Aufnahme von Beschickungsgut. Im vorliegenden Ausführungsbeispiel ist der Beschickungsbehälter 10 ein sogenannter Schrottkorb, welcher für den Transport von Stahlschrott verwendet wird.

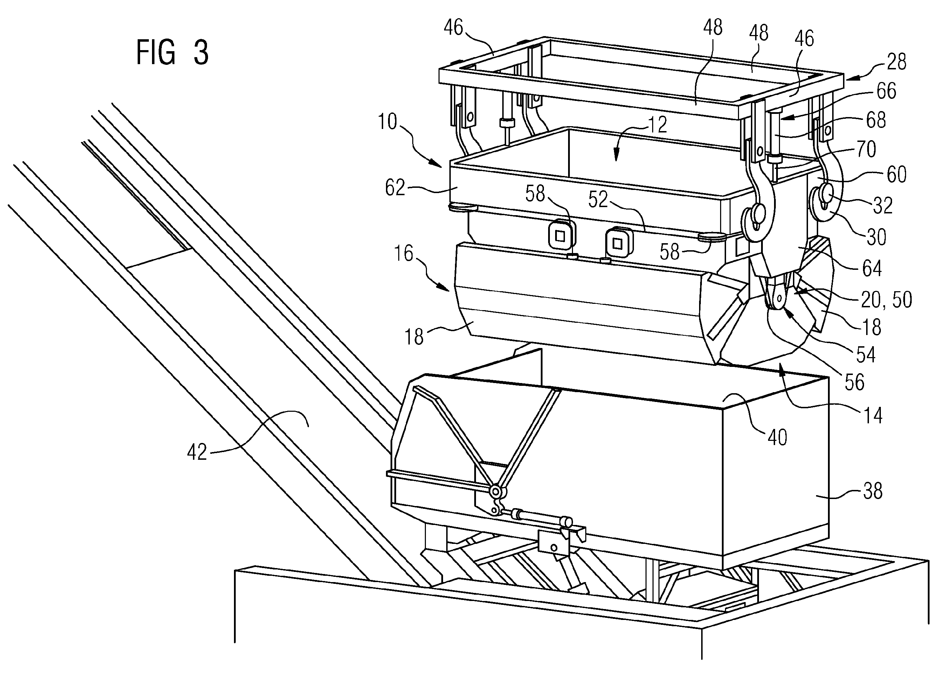

Der Beschickungsbehälter 10 weist an seiner Oberseite eine Aufnahmeöffnung 12 und an seiner Unterseite eine Austrittsöffnung 14 auf (vgl. beispielsweise FIG 3). Über die Aufnahmeöffnung 12 wird der Beschickungsbehälter 10 mit dem Beschickungsgut beladen und über die Austrittsöffnung 14 wird der Beschickungsbehälter 10 entleert.

Außerdem weist der Beschickungsbehälter 10 eine Verschlusseinrichtung 16 zum Schließen und Freigeben seiner Austrittsöffnung 14 auf. Die Verschlusseinrichtung 16 wiederum umfasst zwei schwenkbar gelagerte Bodenklappen 18 (vgl. FIG 3 bis FIG 7), von denen in FIG 1 lediglich eine sichtbar ist. Zudem umfasst der Beschickungsbehälter 10 einen Betätigungsmechanismus 20 zum Betätigen der Verschlusseinrichtung 16, d. h. zum Bewegen der beiden Bodenklappen 18 (vgl. FIG 3 bis FIG 7).

Ferner weist die Beschickungsvorrichtung 8 eine Transportvorrichtung 22 zum Transportieren des Beschickungsbehälters 10 auf. Im vorliegenden Ausführungsbeispiel ist die Transportvorrichtung 22 als Kran ausgebildet. Die Transportvorrichtung 22 umfasst eine auf mehreren (figürlich nicht dargestellten) Stützen abgestützte Laufschieneneinheit 24 sowie eine an der Laufschieneneinheit 24 geführte Laufkatze 26.

Des Weiteren weist die Transportvorrichtung 22 eine als Krantraverse ausgebildete Haltevorrichtung 28 zum Halten des Beschickungsbehälters 10 auf. Die Haltevorrichtung 28 ist mit vier Haltehaken 30 ausgestattet, die jeweils an einem Haltezapfen 32 des Beschickungsbehälters 10 einhakbar sind. In dem Zustand, der in FIG 1 dargestellt ist, sind die vier Haltehaken 30 der Haltevorrichtung 28 an vier Haltezapfen 32 des Beschickungsbehälters 10 eingehakt und realisieren so mit den Haltezapfen 32 eine 4-Punkte-Aufhängung des Beschickungsbehälters 10, wobei in FIG 1 lediglich zwei der Haltehaken 30 sichtbar sind.

Außerdem weist die Transportvorrichtung 22 mehrere die Haltevorrichtung 28 tragende Hubseile 34 auf, welche einen Seilschacht 36 ausbildend geführt sind. Die Hubseile 34 verbinden die Haltevorrichtung 28 mit der Laufkatze 26.

Darüber hinaus umfasst die metallurgische Anlage 2 einen Zwischenbehälter 38, der an seiner Oberseite eine Öffnung 40 aufweist, über welche der Zwischenbehälter 38 mit Beschickungsgut beladen werden kann.

Der Beschickungsbehälter 10 wird bei einem (figürlich nicht dargestellten) Beschickungsgut-Reservoir mit dem Beschickungsgut beladen. Danach wird der Beschickungsbehälter 10 mithilfe der Transportvorrichtung 22 vom Beschickungsgut-Reservoir zum Zwischenbehälter 38 transportiert. Befindet sich der Beschickungsbehälter 10 oberhalb des Zwischenbehälters 38, wird die Verschlusseinrichtung 16 des Beschickungsbehälters 10 geöffnet und dadurch dessen Austrittsöffnung 14 freigegeben. Der Beschickungsbehälter 10 wird über die Austrittsöffnung 14 entleert und das Beschickungsgut in den Zwischenbehälter 38 eingebracht.

Der Zwischenbehälter 38 ist auf einem Schrägaufzug 42 angeordnet und ist dazu vorgesehen, das Beschickungsgut aus dem Beschickungsbehälter 10 aufzunehmen und es zum metallurgischen Ofen 4 weiter zu transportieren. Darüber hinaus weist der Zwischenbehälter 38 eine öffenbare Klappe 44 auf, über welche der Zwischenbehälter 38 entleert werden kann, beispielsweise mithilfe eines (figürlich nicht dargestellten) Kippmechanismus zum Kippen des Zwischenbehälters 38. Unter Verwendung des Zwischenbehälters 38 wird das Beschickungsgut über die Beschickungsöffnung 6 des metallurgischen Ofens 4 in den Ofen 4 eingebracht und in diesem weiterverarbeitet.

Alternativ könnte die Beschickungsvorrichtung 8 eingesetzt werden, um einen metallurgischen Ofen direkt zu beschicken, also ohne das Beschickungsgut zuvor in einen Zwischenbehälter einzubringen.

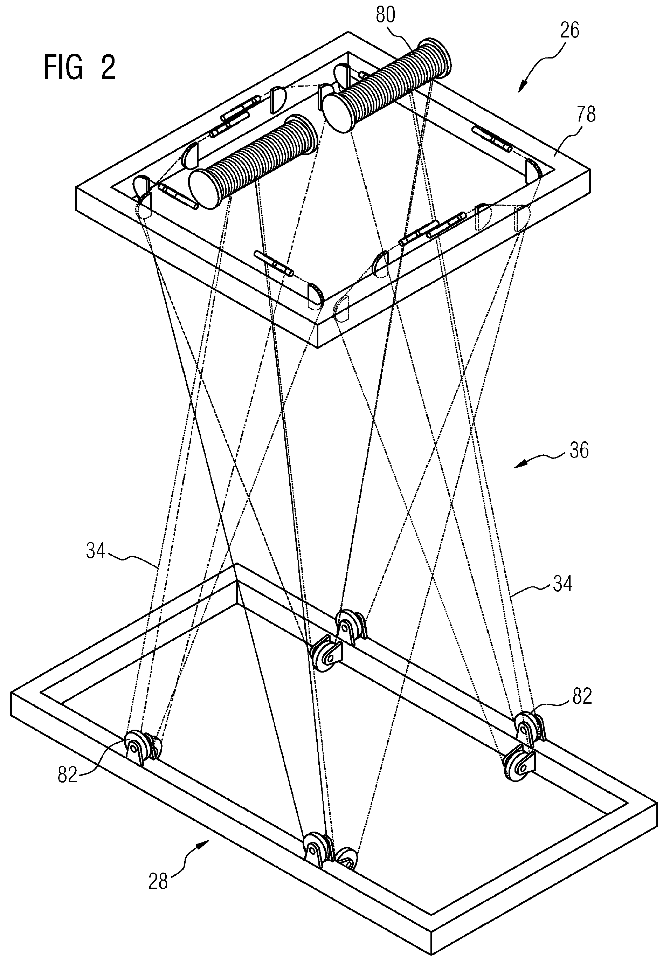

FIG 2 zeigt einen Teil der Transportvorrichtung 22 in einer perspektivischen Darstellung, wobei von der Transportvorrichtung 22 die Haltevorrichtung 28 sowie die Laufkatze 26 dargestellt sind.

Die Laufkatze 26 umfasst einen Katzrahmen 78 sowie zwei motorisch angetriebene Seiltrommeln 80, die auf dem Katzrahmen 78 angeordnet sind. Ferner weist die Haltevorrichtung 28 eine Mehrzahl von Umlenkrollen 82 auf, welche die Hubseile 34 umlenken.

Wie zuvor erwähnt sind die Hubseile 34 einen Seilschacht 36 ausbildend geführt. Die Hubseile 34 sind jeweils mit einem Ende an einer der beiden Seiltrommeln 80 befestigt. Mit ihrem anderen Ende sind die Hubseile 34 jeweils am Katzrahmen 78 befestigt.

Die Hubseile 34 bilden jeweils mehrere tragende Seilstränge aus, die schräg gegenüber der Vertikalen verspannt sind. Jedes der Hubseile 34 weist dabei mehrere Seilstränge auf, die V-förmig zueinander geführt sind. Zudem sind die Seilstränge jeweils über Kreuz zu einem der anderen Seilstränge geführt.

FIG 3 zeigt den Zwischenbehälter 38, den Beschickungsbehälter 10 und einen Teil der Transportvorrichtung 22 in einer perspektivischen Darstellung, wobei von der Transportvorrichtung 22 die Haltevorrichtung 28 dargestellt ist. Einer besseren Übersichtlichkeit halber sind die zuvor erwähnten Umlenkrollen 82 der Haltevorrichtung 28 in dieser Figur nicht darstellt.

In FIG 3 ist die Verschlusseinrichtung 16 im geöffneten Zustand dargestellt. Das heißt, die Austrittsöffnung 14 des Beschickungsbehälters 10 ist freigegeben. Ferner sind in der dargestellten Perspektive alle vier Haltehaken 30 der Haltevorrichtung 28 sichtbar.

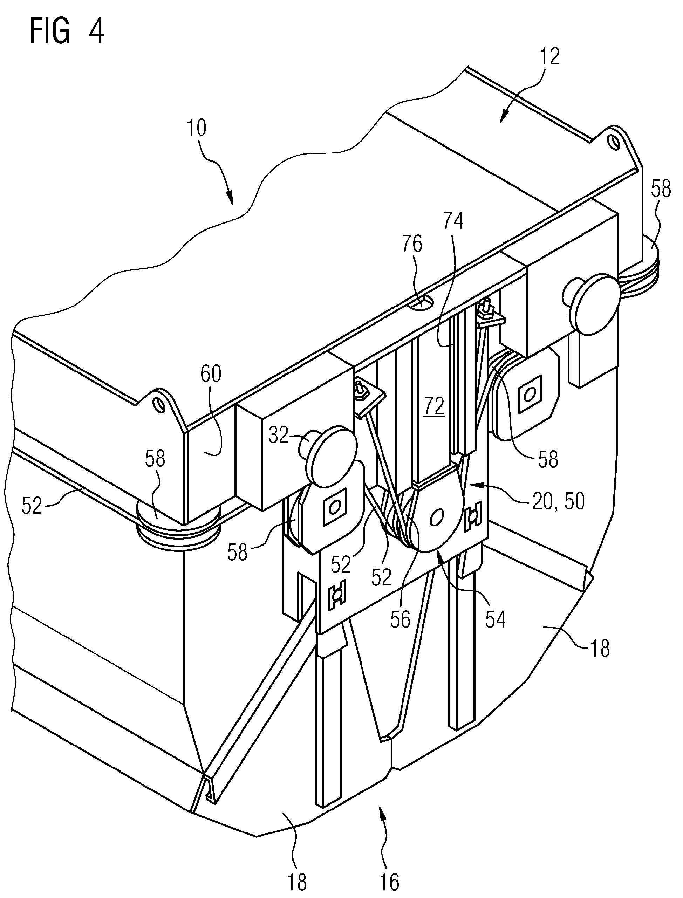

Aus FIG 3 ist ersichtlich, dass die Haltevorrichtung 28 eine reckeckige Form aufweist. Die Haltevorrichtung 28 umfasst zwei Schmalseitenbalken 46 sowie zwei Breitseitenbalken 48, welche an ihren Enden mit den Schmalseitenbalken 46 verbunden sind. An den Schmalseitenbalken 46 sind jeweils zwei der vier Haltehaken 30 der Haltevorrichtung 28 befestigt. Weiter ist ersichtlich, dass der Beschickungsbehälter 10 oberhalb seiner Bodenklappen 18 eckig ausgebildet ist, wohingegen die Bodenklappen 18 als greiferförmige Halbschalen ausgebildet sind. Der zuvor erwähnte Betätigungsmechanismus 20 umfasst zwei Flaschenzüge 50. Jeder der beiden Flaschenzüge 50 umfasst zwei Seile 52 (vgl. FIG 4 bis FIG 7). Außerdem sind die beiden Flaschenzüge 50 als invertierte Flaschenzüge ausgeführt.

Darüber hinaus weist der Beschickungsbehälter 10 an seinen Schmalseitenwänden 60, 62 jeweils eine Linearführung 74 auf (vgl. FIG 4 bis FIG 7). Ferner umfasst jeder der beiden Flaschenzüge 50 einen linear verschiebbar gelagerten Schlitten 72 mit einer Rolleneinheit 54, welche zwei um dieselbe Rotationsachse rotierbar gelagerte Umlenkrollen 56 zum Führen der Seile 52 des jeweiligen Flaschenzugs 50 aufweist (vgl. FIG 4 bis FIG 7).

Einer der beiden Schlitten 72 ist an der Linearführung 74 der ersten Schmalseitenwand 60 des Beschickungsbehälters 10 gelagert. Wohingegen der andere der beiden Schlitten 72 an der zweiten Schmalseitenwand 62 des Beschickungsbehälters 10 gelagert ist. Im geschlossenen Zustand der Verschlusseinrichtung 16 befinden sich die Schlitten 72 jeweils hinter einer Abdeckung 64 des Beschickungsbehälters 10.

Zudem umfasst jeder der beiden Flaschenzüge 50 mehrere ortsfeste angeordnete, d. h. nicht verschiebbare, Umlenkrollen 58 zum Führen der Seile 52 des jeweiligen Flaschenzugs 50.

Weiterhin weist die Haltevorrichtung 28 zwei integrierte Antriebseinheiten 66 auf, die jeweils zum Antreiben eines der beiden Flaschenzüge 50 eingerichtet sind. Bei den beiden Antriebseinheiten 66 handelt es sich jeweils um einen Arbeitszylinder, wie zum Beispiel einen Hydraulik-, Pneumatik- oder Elektrohubzylinder, mit einem Zylindergehäuse 68 und einer Schubstange 70. Zudem sind die beiden Antriebseinheiten 66 jeweils an einem der Schmalseitenbalken 46 der Haltevorrichtung 28 befestigt.

Des Weiteren werden die Antriebseinheiten 66 mithilfe einer (figürlich nicht dargestellten) elektronischen Steuervorrichtung gesteuert, welche einen Prozessor aufweist, auf dem eine Steuersoftware läuft.

Die Steuervorrichtung kann die Antriebseinheiten 66 zum Beispiel unmittelbar steuern, insbesondere wenn die Antriebseinheiten 66 als Elektrohubzylinder ausgeführt sind. Alternativ kann die Steuervorrichtung die Antriebseinheiten 66 mittelbar steuern, insbesondere wenn die Antriebseinheiten 66 als Hydraulik-
oder Pneumatikzylinder ausgeführt sind. Ein mittelbares Steuern kann beispielsweise dadurch erfolgen, dass die Steuervorrichtung eine Pumpe steuert, welche die Stellung der jeweiligen Antriebseinheit 66 beeinflusst.

Grundsätzlich ist es möglich, dass der Beschickungsbehälter 10 nur einen Flaschenzug 50 aufweist. Auf einen der beiden Flaschenzüge 50 des Beschickungsbehälters 10 könnte also prinzipiell verzichtet werden.

FIG 4 zeigt eine perspektivische Darstellung des Beschickungsbehälters 10, in welcher einer der beiden Flaschenzüge 50 sichtbar ist.

Die nachfolgend im Zusammenhang mit FIG 4 bis FIG 7 hinsichtlich eines Flaschenzugs gemachten Ausführungen beziehen sich auf den sichtbaren Flaschenzug 50, gelten in analoger Weise aber auch für den anderen Flaschenzug 50 (an der gegenüberliegenden Seite) des Beschickungsbehälters 10.

In FIG 4 ist die Verschlusseinrichtung 16 im geschlossenen Zustand dargestellt. Ferner ist die zuvor erwähnte Abdeckung 64 nicht dargestellt, sodass der Schlitten 72 des Flaschenzugs 50 mit seiner Rolleneinheit 54 sichtbar ist.

Der Beschickungsbehälter 10 weist an seiner Oberseite für die Schubstange 70 der jeweiligen Antriebseinheit 66 jeweils eine Öffnung 76 auf.

Wird die Schubstange 70 der oberhalb des Schlittens 72 angeordneten Antriebseinheit 66 (hinreichend weit) ausgefahren, tritt die Schubstange 70 durch die Öffnung 76 und drückt gegen den Schlitten 72.

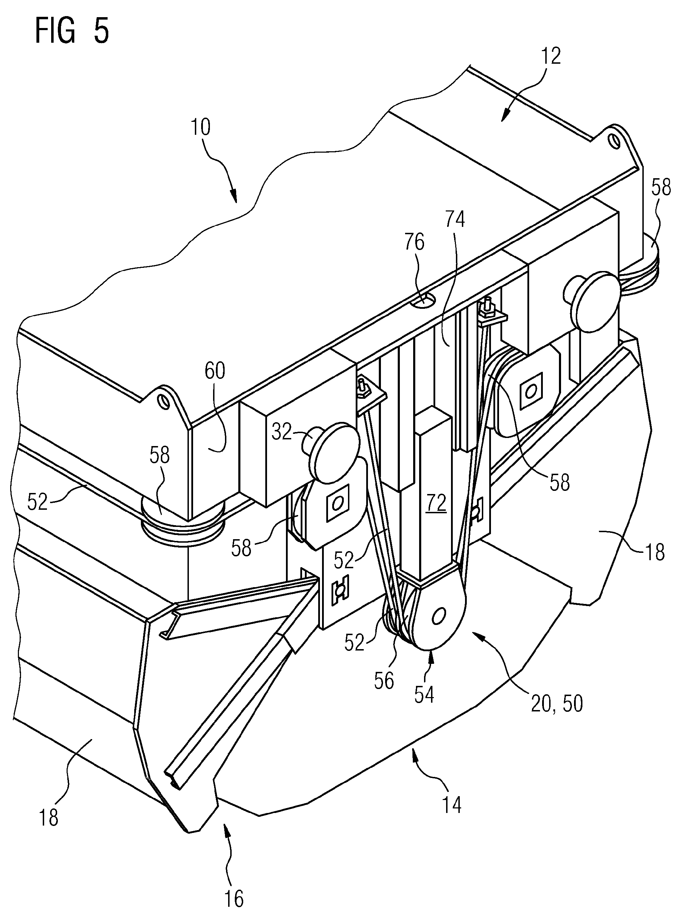

FIG 5 zeigt ebenfalls eine perspektivische Darstellung des Beschickungsbehälters 10, wobei der Beschickungsbehälter 10 in derselben Perspektive dargestellt ist wie in FIG 4.

Anders als in FIG 4, ist in FIG 5 die Verschlusseinrichtung 16 des Beschickungsbehälters 10 geöffnet. Das heißt, die Bodenklappen 18 sind nach außen geschwenkt, sodass die Austrittsöffnung 14 des Beschickungsbehälters 10 freigegeben ist. In diesem Zustand befindet sich der Schlitten 72 in einer tieferen Position als im geschlossenen Zustand der Verschlusseinrichtung 16.

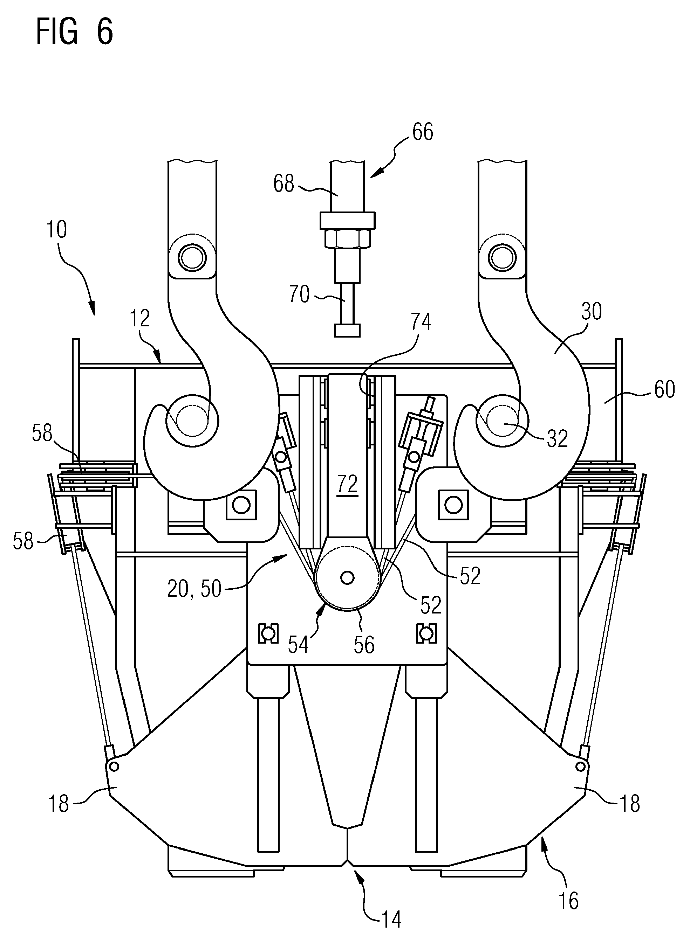

FIG 6 zeigt eine Seitenansicht des Beschickungsbehälters 10. Außerdem ist ein Teil der Transportvorrichtung 22, nämlich ein Abschnitt einer der Antriebseinheiten 66 sowie Abschnitte von zweien der Haltehaken 30, erkennbar.

In FIG 6 ist die Verschlusseinrichtung 16 im geschlossenen Zustand dargestellt. In diesem Zustand ist die Schubstange 70 der oberhalb des Schlittens 72 angeordneten Antriebseinheit 66 vom Schlitten 72 beabstandet.

Die beiden Seile 52 des Flaschenzugs 50 sind jeweils an einem ihrer beiden Enden an einer Seitenwand des Beschickungsbehälters 10 befestigt. Mit ihrem anderen Ende sind die beiden Seile 52 des Flaschenzugs 50 jeweils an einer der Bodenklappen 18 befestigt.

Jedes der beiden Seile 52 des Flaschenzugs 50 ist entlang einer der beiden Umlenkrollen 56 der Rolleneinheit 54 des Schlittens 72 geführt. Zudem ist der Flaschenzug 50, wie zuvor erwähnt, mit mehreren nicht verschiebbaren Umlenkrollen 58 zum Umlenken der Seile 52 ausgestattet.

Die Umlenkrollen 56, 58 des Flaschenzugs 50 sind derart positioniert bzw. die Seile 52 des Flaschenzugs 50 sind mithilfe der Umlenkrollen 56, 58 derart geführt, dass ein nach unten Verschieben der Rolleneinheit 54 dazu führt, dass Bodenklappen 18 der Verschlusseinrichtung 16 auseinander geführt bzw. auseinander geschwenkt werden.

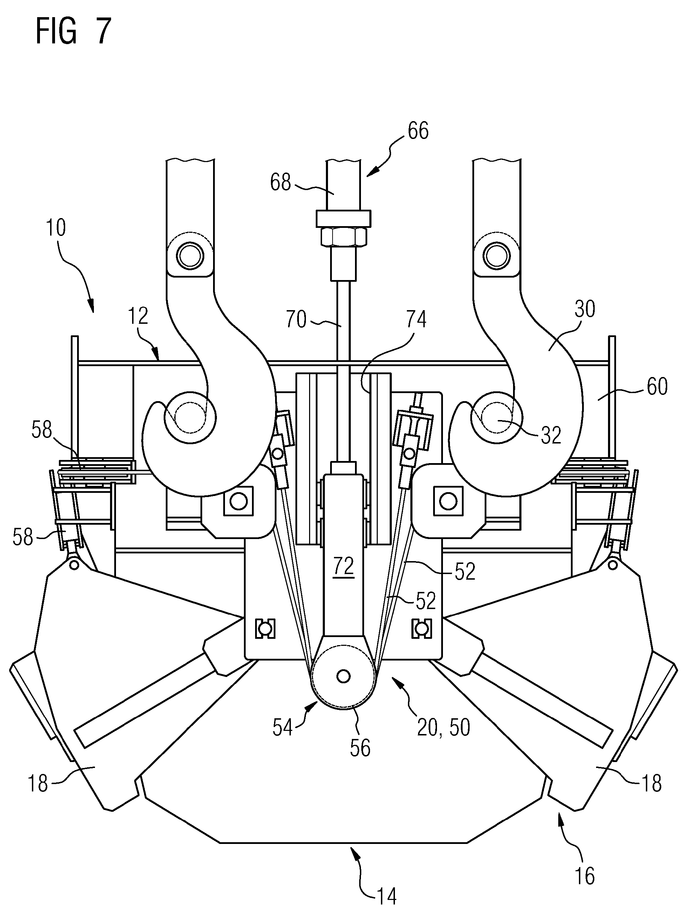

Zum Öffnen der Verschlusseinrichtung 16 wird die Schubstange 70 der Antriebseinheit 66 aus ihrem Zylindergehäuse 68 (nach unten) ausgefahren. Sobald die Schubstange 70 den Schlitten 72 berührt, drückt die Schubstange 70 den Schlitten 72 nach unten. Durch das Runterdrücken des Schlittens 72 werden die Bodenklappen 18 der Verschlusseinrichtung 16 mithilfe der Seile 52 des Flaschenzugs 50 auseinander geführt, sodass die Austrittsöffnung 14 des Beschickungsbehälters 10 freigegeben wird (vgl. FIG 7).

Der Abwärtshub, den die Antriebseinheit 66 erbringen muss (nachdem die Schubstange 70 den Schlitten 72 berührt), um die Bodenklappen 18 um eine vorgegebene Strecke anzuheben, entspricht circa der Hälfte dieser vorgegebenen Strecke.

Zum Schließen der Verschlusseinrichtung 16 wird die Schubstange 70 in das Zylindergehäuse 68 eingefahren. Die Bodenklappen 18 werden dabei unter Einfluss der auf sie wirkenden Gewichtskraft zusammengeführt.

FIG 7 zeigt ebenfalls eine Seitenansicht des Beschickungsbehälters 10. In dieser Figur ist die Verschlusseinrichtung 16 des Beschickungsbehälters 10 geöffnet dargestellt. Die Schubstange 70 der oberhalb des Schlittens 72 angeordneten Antriebseinheit 66 ist hierbei ausgefahren und drückt gegen den Schlitten 72, sodass die Bodenklappen 18 mithilfe des Flaschenzugs 50 auseinander gehalten werden.

Obwohl die Erfindung im Detail durch das bevorzugte Ausführungsbeispiel näher illustriert und beschrieben wurde, so ist die Erfindung nicht durch das offenbarte Beispiel eingeschränkt und andere Variationen können hieraus abgeleitet werden, ohne den Schutzumfang der Erfindung zu verlassen.

### Bezugszeichenliste

- 2: Anlage
- 4: Ofen
- 6: Beschickungsöffnung
- 8: Beschickungsvorrichtung
- 10: Beschickungsbehälter
- 12: Aufnahmeöffnung
- 14: Austrittsöffnung
- 16: Verschlusseinrichtung
- 18: Bodenklappe
- 20: Betätigungsmechanismus
- 22: Transportvorrichtung
- 24: Laufschieneneinheit
- 26: Laufkatze
- 28: Haltevorrichtung
- 30: Haltehaken
- 32: Haltezapfen
- 34: Hubseil
- 36: Seilschacht
- 38: Zwischenbehälter
- 40: Öffnung
- 42: Schrägaufzug
- 44: Klappe
- 46: Schmalseitenbalken
- 48: Breitseitenbalken
- 50: Flaschenzug
- 52: Seil
- 54: Rolleneinheit
- 56: Umlenkrolle
- 58: Umlenkrolle
- 60: Schmalseitenwand
- 62: Schmalseitenwand
- 64: Abdeckung
- 66: Antriebseinheit
- 68: Zylindergehäuse
- 70: Schubstange
- 72: Schlitten
- 74: Linearführung
- 76: Öffnung
- 78: Katzrahmen
- 80: Seiltrommel
- 82: Umlenkrolle

## Patentansprüche

1. Beschickungsvorrichtung (8) für eine metallurgische Anlage (2), aufweisend einen Beschickungsbehälter (10) zur Aufnahme von Beschickungsgut, insbesondere zur Aufnahme von Schrott, und eine Transportvorrichtung (22) zum Transportieren des Beschickungsbehälters (10), welche eine Haltevorrichtung (28) zum Halten des Beschickungsbehälters (10) umfasst,
**dadurch gekennzeichnet, dass** die Transportvorrichtung (22) mehrere die Haltevorrichtung (28) tragende Hubseile (34) aufweist, die einen Seilschacht (36) ausbildend geführt sind.

2. Beschickungsvorrichtung (8) nach Anspruch 1,
**dadurch gekennzeichnet, dass** die Transportvorrichtung (22) als Kran, insbesondere als Portalkran oder als Brückenkran, ausgebildet ist, wobei die Transportvorrichtung (22) eine Laufschieneneinheit (24) sowie eine an der Laufschieneneinheit (24) geführte Laufkatze (26) umfasst.

3. Beschickungsvorrichtung (8) nach Anspruch 2,
**dadurch gekennzeichnet, dass** die Hubseile (34) an der Laufkatze (26) befestigt sind.

4. Beschickungsvorrichtung (8) nach einem der vorhergehenden Ansprüche,
**dadurch gekennzeichnet, dass** die Haltevorrichtung (28) mehrere Umlenkrollen (82) zum Umlenken der Hubseile (34) aufweist.

5. Beschickungsvorrichtung (8) nach einem der vorhergehenden Ansprüche,
**dadurch gekennzeichnet, dass** die Haltevorrichtung (28) eine Krantraverse ist und die Haltevorrichtung (28) mehrere Haltehaken (30) aufweist.

6. Beschickungsvorrichtung (8) nach einem der vorhergehenden Ansprüche,
**dadurch gekennzeichnet, dass** die Haltevorrichtung (28) mindestens vier Haltehaken (30) aufweist.

7. Beschickungsvorrichtung (8) nach einem der vorhergehenden Ansprüche,
**dadurch gekennzeichnet, dass** der Beschickungsbehälter (10) eine Austrittsöffnung (14), eine Verschlusseinrichtung (16) zum Schließen und Freigeben der Austrittsöffnung (14) sowie einen Betätigungsmechanismus (20) zum Betätigen der Verschlusseinrichtung (16) aufweist.

8. Beschickungsvorrichtung (8) nach Anspruch 7,
**dadurch gekennzeichnet, dass** die Verschlusseinrichtung (16) zwei schwenkbar gelagerte Bodenklappen (18) umfasst.

9. Beschickungsvorrichtung (8) nach Anspruch 7 oder 8, **dadurch gekennzeichnet, dass** der Betätigungsmechanismus (20) mindestens einen Seilzug (50) umfasst, welcher mindestens ein Seil (52) aufweist, das an der Verschlusseinrichtung (16) befestigt ist.

10. Beschickungsvorrichtung (8) nach einem der Ansprüche 7 bis 9,
**dadurch gekennzeichnet, dass** der Betätigungsmechanismus (20) mindestens einen Flaschenzug (50), insbesondere mindestens einen invertierten Flaschenzug, umfasst, welcher mindestens ein Seil (52) aufweist, das an der Verschlusseinrichtung (16) befestigt ist.

11. Beschickungsvorrichtung (8) nach Anspruch 10,
**dadurch gekennzeichnet, dass** der Beschickungsbehälter (10) eine Linearführung (74) aufweist und der Flaschenzug (50) einen an der Linearführung (74) linear verschiebbar gelagerten Schlitten (72) mit einer Rolleneinheit (54) umfasst.

12. Beschickungsvorrichtung (8) nach einem der Ansprüche 7 bis 11,
**dadurch gekennzeichnet, dass** die Transportvorrichtung (22) mindestens eine Antriebseinheit (66) zum Antreiben des Betätigungsmechanismus (20) aufweist, welche an der Haltevorrichtung (28) befestigt ist.

13. Beschickungsvorrichtung (8) nach Anspruch 12,
**dadurch gekennzeichnet, dass** die Antriebseinheit (66) als Arbeitszylinder, insbesondere als Hydraulik-, Pneumatik- oder Elektrohubzylinder, ausgebildet ist.

14. Beschickungsvorrichtung (8) nach einem der vorhergehenden Ansprüche,
**dadurch gekennzeichnet, dass** der Beschickungsbehälter (10) mehrere, insbesondere mindestens vier, Haltezapfen (32) aufweist, an welche jeweils ein Haltehaken (30) der Haltevorrichtung (28) einhakbar ist.

15. Metallurgische Anlage (2) mit einer Beschickungsvorrichtung (8) nach einem der vorhergehenden Ansprüche und einem metallurgischen Ofen (4), insbesondere einem Lichtbogenofen, wobei der metallurgische Ofen (4) eine Beschickungsöffnung (6) aufweist, durch welche Beschickungsgut, insbesondere Schrott, in den metallurgischen Ofen (4) einführbar ist.
